(19) Europäisches Patentamt
European Patent Office
Office européen des brevets

(11) Veröffentlichungsnummer: **0 037 505**
**B1**

(12) **EUROPÄISCHE PATENTSCHRIFT**

(45) Veröffentlichungstag der Patentschrift: **18.05.83**

(51) Int. Cl.³: **C 09 B 26/04,** C 09 B 44/00

(21) Anmeldenummer: **81102163.3**

(22) Anmeldetag: **23.03.81**

(54) **Verfahren zur Herstellung kationischer Farbstoffe.**

(30) Priorität: **05.04.80 DE 3013273**

(43) Veröffentlichungstag der Anmeldung: **14.10.81 Patentblatt 81/41**

(45) Bekanntmachung des Hinweises auf die Patenterteilung: **18.05.83 Patentblatt 83/20**

(84) Benannte Vertragsstaaten: **CH DE FR GB IT LI**

(56) Entgegenhaltungen:
**DE-A-2 825 296**
**FR-A-2 164 645**

**CHEMICAL ABSTRACTS, Band 83, Nr. 4, 28. Juli 1975, Seite 98, Nr. 29878s Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Gleinig, Harald, Dr., Eichholzer Weg 100, D-5068 Odenthal (DE)**
Erfinder: **Berger-Lohr, Bernd, Dr., Heymannstrasse 63, D-5090 Leverkusen 1 (DE)**
Erfinder: **Breig, Kurt, Dr., Leopold-Gmelin-Strasse 80, D-5000 Koeln 80 (DE)**

**EP 0 037 505 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung kationischer Farbstoffe

Die vorliegende Erfindung betrifft ein Verfahren zur Herstellung von kationischen Farbstoffen der allgemeinen Formel

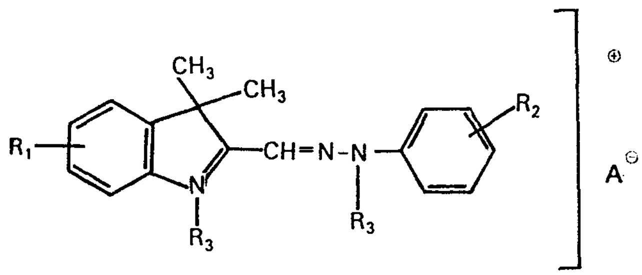

I

worin
$R_1$ für Wasserstoff, $C_1$-$C_4$-Alkyl, $C_1$- bis $C_4$-Alkoxy, Nitro oder Halogen,
$R_2$ für Wasserstoff, $C_1$- bis $C_4$-Alkyl, $C_1$- bis $C_4$-Alkoxy, Halogen oder Phenylazo,
$R_3$ für $C_1$- bis $C_3$-Alkyl und
$A^{\ominus}$ für ein Anion stehen,
durch Umsetzung von Azobasen der allgemeinen Formel

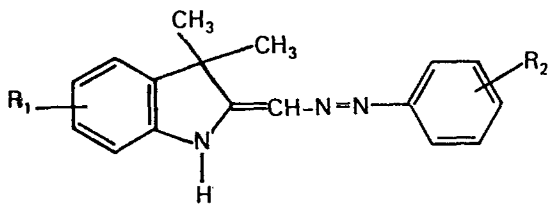

II

worin
$R_1$ und $R_2$ die obengenannte Bedeutung haben, oder deren Salze mit anorganischen oder organischen Säuren mit Dialkylsulfaten der allgemeinen Formel

$(R_3\text{-}O\text{-})_2SO_2$ III

worin
$R_3$ die obengenannte Bedeutung hat.
in Abwesenheit von organischen Lösungsmitteln in Gegenwart von Wasser, wobei das Gewichtsverhältnis von Azobase:Wasser 100:20–300 und das Molverhältnis Azobase:Dialkylsulfat 1:3,5–5,0 betragen, und gegebenenfalls durch Austausch des Alkylsulfat-Anions gegen ein anderes Anion.

Das erfindungsgemässe Verfahren ermöglicht es, Farbbasen der allgemeinen Formel II schnell und quantitativ zu alkylieren und insbesondere die intermediär entstehenden, schwer quaternierbaren, schwachen Farbbasen der allgemeinen Formel

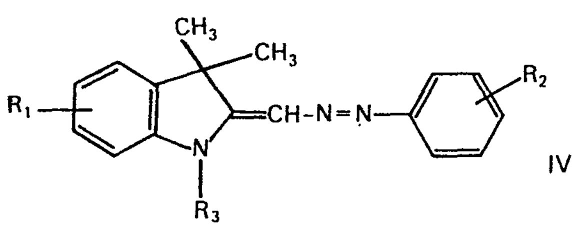

IV

in rascher Reaktion quantitativ in die Farbstoffe I zu überführen.

Das Verfahren wird in der Regel in einem pH-Bereich von 6–10 unter Verwendung von säurebindenden Mitteln wie Alkali- oder Erdalkalioxide, -hydroxide, -carbonate oder -bicarbonate bei Temperaturen zwischen 20 und 100°C durchgeführt und erfordert nur sehr kurze Reaktionszeiten von ca. 30 Minuten bis ca. 2 bis 3 Stunden.

Ein wesentliches Kriterium des erfindungsgemässen Verfahrens ist das Verhältnis von Azobase:Wasser:Dialkylsulfat, das in den angegebenen Bereichen zu einer Schmelze führt.

Das bevorzugte Gewichtsverhältnis von Azobase:Wasser ist 100:50–150 und das bevorzugte Molverhältnis von Azobase:Dialkylsulfat ist 1:3,5–4,5.

Die angegebenen Wassermengen schliessen das eventuell bei der Reaktion des säurebindenden Mittels entstehende Wasser ein.

Anstelle der Farbbasen der Formel II können ihre Salze mit anorganischen oder organischen Säuren, z.B. mit Chlorwasserstoff-, Schwefel-, Essig- oder Phosphorsäure, eingesetzt werden. Dabei werden vorzugsweise die Salze verwendet, die bei der Herstellung der Farbbasen durch Diazotierung entsprechender Anilinderivate und Kupplung mit 2,3,3-Trimethylindolenin-Derivaten erhalten werden. Durch Zusatz von säurebindenden Mitteln im ersten Reaktionsschritt werden die Farbbasen in Freiheit gesetzt.

Eine besonders geeignete Ausführungsform des Verfahrens besteht darin, das Quaternierungsmittel vorzulegen – gegebenenfalls zusammen mit der entsprechenden Menge Wasser und einem Teil eines säurebindenden Mittels – und die Azobase trocken oder als feuchte Paste mit dem Rest des säurebindenden Mittels anschliessend einzutragen, wobei das Quaternierungsmittel der Farbbase gleichzeitig als Lösungsmittel dient.

Als Quaternierungsmittel sind z.B. Dimethylsulfat und Diethylsulfat, besonders aber Dimethylsulfat zu nennen.

In den Formeln wird unter Halogen vorzugsweise Chlor und Brom verstanden.

Bevorzugt stehen:
$R_1$ für Wasserstoff, Methyl oder Methoxy,
$R_2$ für Wasserstoff, Methyl, Ethyl. Methoxy, Etho-

xy oder Phenylazo,
$R_3$ für Methyl oder Ethyl und
$A^{\ominus}$ für Methosulfat, Ethosulfat, Chlorid, Sulfat, Phosphat oder Acetat oder Gemische dieser Anionen.

Besonders geeignet ist das erfindungsgemässe Verfahren zur Herstellung der Farbstoffe der Formel I, worin
$R_1$ für Wasserstoff,
$R_2$ für Wasserstoff, Methoxy, Methyl oder Phenylazo,
$R_3$ für Methyl und
$A^{\ominus}$ für die obengenannten Anionen stehen,
und insbesondere zur Herstellung des Farbstoffs der Formel

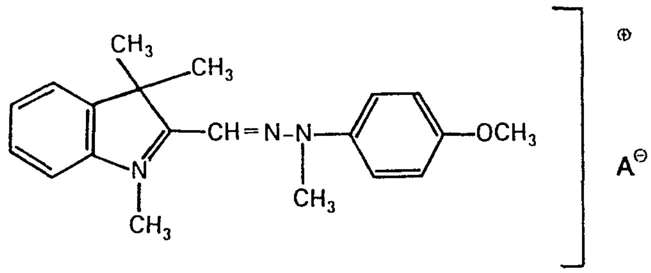

V

Gegenüber bekannten wässrigen Quaternierungsverfahren, die mit einem grösseren Gewichtsverhältnis von Wasser : Azobase arbeiten, z.B. dem aus DE-OS 22 62 780 bekannten Verfahren, liegt der Vorteil des erfindungsgemässen Verfahrens darin, dass erheblich weniger Quaternierungsmittel bei quantitativem Umsatz benötigt wird.

Gegenüber wasserfreien Quaternierungsverfahren, z.B. dem aus DE-A- 28 25 296 bekannten Verfahren, benötigt man beim erfindungsgemässen Verfahren erheblich kürzere Reaktionszeiten und erzielt ausserdem vollständigere Umsetzungen.

Aus Chemical Abstracts Bd. 83 (1975) Nr. 4, S. 98, Nr. 29878 s ist ein Quaternierungsverfahren bekannt, bei dem ein Gewichtsverhältnis von Azobase:Wasser von etwa 1:3,3 und ein Molverhältnis von Azobase:Dimethylsulfat von etwa 1:5,6 verwendet wird. Überraschenderweise zeigt sich nun, dass mit dem neuen Verfahren trotz der Verringerung der Wasser- und Dialkylsulfat-Menge Farbstoffe erhalten werden, die in bezug auf Reinheit und Ausbeute den nach dem bekannten Verfahren hergestellten Farbstoffen entsprechen.

Das bevorzugte Verfahren kann im einzelnen so durchgeführt werden, dass man z.B. Dialkylsulfat, die entsprechende Menge Wasser und einen Teil des säurebindenden Mittels vorlegt und eine Farbbase der allgemeinen Formel II, trocken oder gegebenenfalls als feuchte Paste, zusammen mit dem Rest des säurebindenden Mittels bei 20-50°C, vorzugsweise 20-40°C so einträgt, dass der pH-Wert nicht unter 7, vorzugsweise 7-9, abfällt.

Anschliessend steigert man die Temperatur zur quantitativen Umsetzung auf 65-100°C, wobei eine nahezu homogene Schmelze entsteht.

Das Reaktionsgemisch wird dann mit Säure, z.B. Salzsäure, Schwefelsäure, Essigsäure oder Phosphorsäure auf pH 1-7, vorzugsweise 3-6, gestellt, und beispielsweise in einem Vakuumschaufeltrockner oder Sprühtrockner zur Trockne eingedampft.

Das Verfahren liefert wertvolle kationische Hydrazon-Farbstoffe mit den handelsüblichen Echtheiten und klaren brillanten Farbtönen. Es hat den Vorteil, dass kein Abwasser anfällt.

Beispiel

Zu einer Mischung von 504 g Dimethylsulfat, 100 g Wasser und 75 g Soda werden innerhalb 1 Stunde bei 25-30°C 470 g Farbstoff der Formel

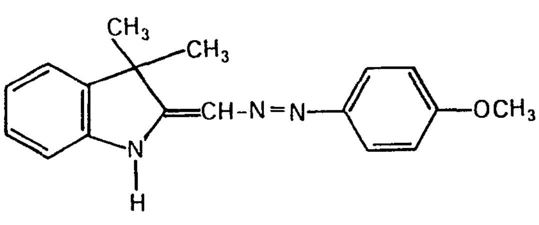

(als HCl-Salz)

mit einem Trockengehalt von 70%, portionsweise eingetragen. Simultan dazu werden 145 g Soda so eingetragen, dass der pH-Wert nicht unter 7, vorzugsweise 7-9, abfällt.

Anschliessend erhitzt man das Reaktionsgemisch in ca. 15-20 Minuten auf 70-80°C, wobei eine homogene Reaktionsschmelze entsteht. Die Reaktion ist beendet, wenn dünnschichtchromatographisch keine bzw. lediglich geringe Spuren der intermediär entstandenen methylierten Base nachzuweisen sind. Gegebenenfalls setzt man weitere geringe Mengen Soda und Dimethylsulfat zu. Die Reaktionsschmelze wird dann mit Salzsäure auf pH 4-6 gebracht und im Vakuumschaufeltrockner zur Trockne eingedampft. Es resultieren ca. 925 g trockner Hydrazon-Farbstoff der Formel V mit dem entsprechenden Gehalt an Reaktionssalzen. Das Reaktionsprodukt kann ohne weitere Reinigung zum Färben eingesetzt werden.

Analog zu diesem Beispiel lassen sich auch die Farbbasen der allgemeinen Formel II, in der $R_1$ für Wasserstoff, $R_2$ für Wasserstoff, p-$CH_3$ oder

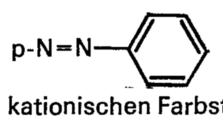 stehen, in die entsprechenden kationischen Farbstoffe überführen.

**Patentansprüche**

1. Verfahren zur Herstellung von kationischen Farbstoffen der allgemeinen Formel

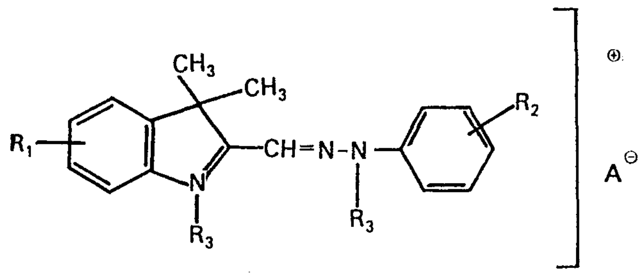

worin
$R_1$ für Wasserstoff, $C_1$- bis $C_4$-Alkyl, $C_1$- bis $C_4$-Alkoxy, Nitro oder Halogen,
$R_2$ für Wasserstoff, $C_1$- bis $C_4$-Alkyl, $C_1$- bis $C_4$-Alkoxy, Halogen oder Phenylazo,
$R_3$ für $C_1$- bis $C_3$-Alkyl und
$A^\ominus$ für ein Anion stehen,
durch Umsetzung von Azobasen der allgemeinen Formel

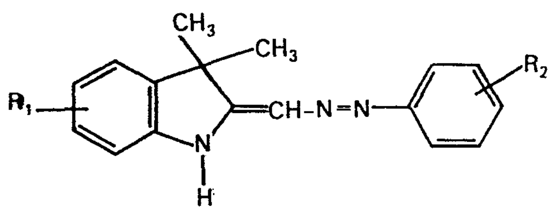

oder deren Salze mit anorganischen oder organischen Säuren mit Dialkylsulfaten der allgemeinen Formel

$(R_3\text{-O-})_2SO_2$

in Abwesenheit von organischen Lösungsmitteln und in Anwesenheit von Wasser und gegebenenfalls durch Austausch des Alkylsulfat-Anions gegen ein anderes Anion, dadurch gekennzeichnet, dass das Gewichtsverhältnis von Azobase:Wasser 100:20–300 und das Molverhältnis Azobase:Dialkylsulfat 1:3,5–5,0 betragen.

2. Verfahren gemäss Anspruch 1, dadurch gekennzeichnet, dass das Gewichtsverhältnis von Azobase:Wasser 100:50–150 und das Molverhältnis von Azobase:Dialkylsulfat 1:3,5–4,5 betragen.

3. Verfahren gemäss Anspruch 1, dadurch gekennzeichnet, dass man das Dialkylsulfat, ein säurebindendes Mittel und Wasser vorlegt und die Azobase und weiteres säurebindendes Mittel zugibt.

4. Verfahren gemäss Anspruch 3, dadurch gekennzeichnet, dass man die Azobase als feuchte Paste zugibt.

5. Verfahren gemäss Anspruch 1, dadurch gekennzeichnet, dass man die Umsetzung bei pH-Werten von 6–10 durchführt.

6. Verfahren gemäss Anspruch 1, dadurch gekennzeichnet, dass man die Umsetzung bei 20–100°C während 30 Minuten bis ca. 2 bis 3 Stunden durchführt.

7. Verfahren zur Herstellung von kationischen Farbstoffen der Formel des Anspruchs 1, worin
$R_1$ für Wasserstoff, Methyl oder Methoxy,
$R_2$ für Wasserstoff, Methyl, Ethyl, Methoxy, Ethoxy oder Phenylazo,
$R_3$ für Methyl oder Ethyl und
$A^\ominus$ für Methosulfat, Ethosulfat, Chlorid, Sulfat, Phosphat oder Acetat oder Gemische dieser Anionen stehen.

**Claims**

1. Process for the preparation of cationic dyestuffs of the general formula

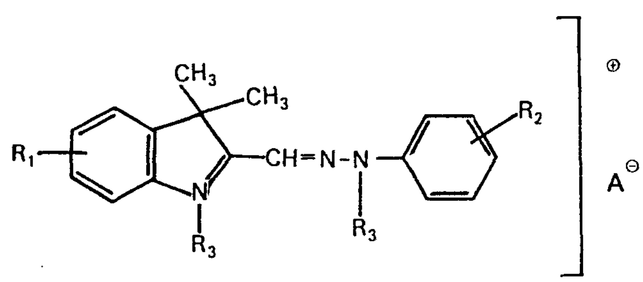

wherein
$R_1$ represents hydrogen, $C_1$- to $C_4$-alkyl, $C_1$- to $C_4$-alkoxy, nitro or halogen,
$R_2$ represents hydrogen, $C_1$- to $C_4$-alkyl, $C_1$- to $C_4$-

alkoxy, halogen or phenylazo,
$R_3$ represents $C_1$- to $C_3$-alkyl and
$A^{\ominus}$ represents an anion,
by reacting azo bases of the general formula

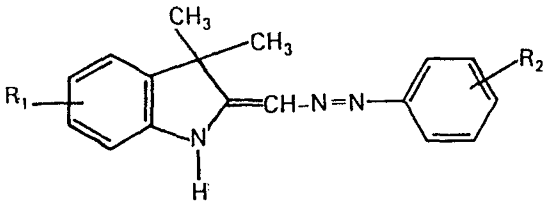

or salts thereof with inorganic or organic acids, with dialkyl sulphates of the general formula

$(R_3\text{-}O\text{-})_2SO_2$

in the absence of organic solvents and in the presence of water and, if desired, by replacing the alkylsulphate anion with another anion, characterised in that the weight ratio of azo base to water is 100:20–300 and the molar ratio of azo base to dialkyl sulphate is 1:3.5–5.0.

2. Process according to Claim 1, characterised in that the weight ratio of azo base to water is 100:50–150 and the molar ratio of azo base to dialkyl sulphate is 1:3.5–4.5.

3. Process according to Claim 1, characterised in that the dialkyl sulphate, an acid-binding agent and water are initially introduced and the azo base and further acid-binding agent are added.

4. Process according to Claim 3, characterised in that the azo base is added in the form of a moist paste.

5. Process according to Claim 1, characterised in that the reaction is carried out at pH values of 6–10.

6. Process according to Claim 1, characterised in that the reaction is carried out at 20–100°C for 30 minutes to about 2 to 3 hours.

7. Process for the preparation of cationic dyestuffs of the formula of Claim 1, wherein
$R_1$ represents hydrogen, methyl or methoxy,
$R_2$ represents hydrogen, methyl, ethyl, methoxy, ethoxy or phenylazo,
$R_3$ represents methyl or ethyl and
$A^{\ominus}$ represents methosulphate, ethosulphate, chloride, sulphate, phosphate or acetate or mixtures of these anions.

**Revendications**

1. Procédé de production de colorants cationiques de formule générale

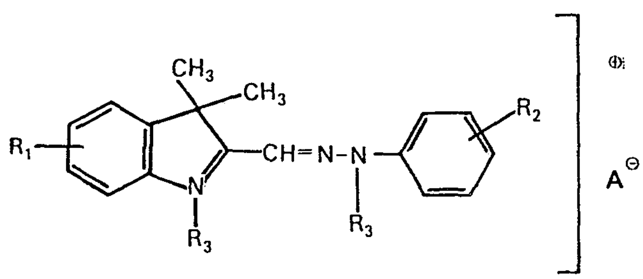

dans laquelle
$R_1$ est l'hydrogène, un groupe alkyle en $C_1$ à $C_4$, un groupe alkoxy en $C_1$ à $C_4$, un groupe nitro ou un halogène,
$R_2$ est l'hydrogène, un groupe alkyle en $C_1$ à $C_4$ alkoxy en $C_1$ à $C_4$, un halogène ou le groupe phénylazo,
$R_3$ est un groupe alkyle en $C_1$ à $C_3$, et
$A^{\ominus}$ désigne un anion,
par réaction de bases azoïques de formule générale

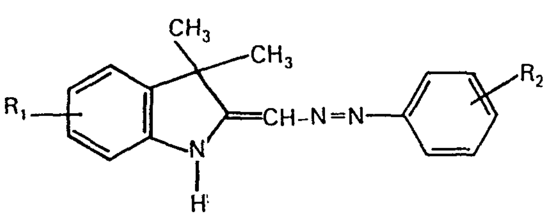

ou de leurs sels d'acides inorganiques ou organiques, avec des sulfates dialkyliques de formule générale

$(R_3\text{-}O\text{-})_2SO_2$

en l'absence de solvants organiques et en présence d'eau, et, le cas échéant, par échange de l'anion alkylsulfate contre un autre anion, caractérisé en ce que le rapport en poids de la base azoïque à l'eau a une valeur de 100:20–300 et le rapport molaire de la base azoïque au sulfate de dialkyle, a une valeur de 1:3,5–5,0.

2. Procédé suivant la revendication 1, caractérisé en ce que le rapport en poids de la base azoïque à l'eau a une valeur de 100:50–150 et le rapport molaire de la base azoïque au sulfate de dialkyle a une valeur de 1:3,5–4,5.

3. Procédé suivant la revendication 1, caractérisé en ce qu'on introduit tout d'abord le sulfate de dialkyle, un accepteur d'acide et l'eau et on ajoute la base azoïque et une quantité supplémentaire d'accepteur d'acide.

4. Procédé suivant la revendication 3, caractérisé en ce qu'on ajoute la base azoïque sous la forme d'une pâte humide.

5. Procédé suivant la revendication 1, caractérisé en ce qu'on conduit la réaction à des valeurs de pH de 6 à 10.

6. Procédé suivant la revendication 1, caractérisé en ce qu'on conduit la réaction à 20–100°C pendant une période allant de 30 minutes à environ 2 à 3 heures.

7. Procédé de production de colorants cationiques de formule suivant la revendication 1, dans laquelle
$R_1$ est l'hydrogène, le groupe méthyle ou le groupe méthoxy,
$R_2$ est l'hydrogène, le groupe méthyle, éthyle, méthoxy, éthoxy ou phénylazo,
$R_3$ est le groupe méthyle ou éthyle, et
$A^\ominus$ est l'anion méthosulfate, éthosulfate, chlorure, sulfate, phosphate ou acétate ou des mélanges de ces anions.